**Europäisches Patentamt**

**European Patent Office**

**Office européen des brevets**

(19)

(11) Veröffentlichungsnummer : **0 386 579 B1**

(12)

# EUROPÄISCHE PATENTSCHRIFT

(45) Veröffentlichungstag der Patentschrift :
**01.07.92 Patentblatt 92/27**

(51) Int. Cl.$^5$ : **C04B 41/48,** C04B 30/02

(21) Anmeldenummer : **90103709.3**

(22) Anmeldetag : **26.02.90**

(54) Imprägnierter Formkörper auf Basis von mineralischen Fasern, Füllstoffen und Stärke.

(30) Priorität : **04.03.89 DE 3907013**

(43) Veröffentlichungstag der Anmeldung :
**12.09.90 Patentblatt 90/37**

(45) Bekanntmachung des Hinweises auf die
Patenterteilung :
**01.07.92 Patentblatt 92/27**

(84) Benannte Vertragsstaaten :
**AT BE CH DE ES FR GB IT LI NL SE**

(56) Entgegenhaltungen :
EP-A- 0 123 234
FR-A- 2 146 766
FR-E- 77 766
US-A- 4 613 542

(73) Patentinhaber : **BASF Aktiengesellschaft
Carl-Bosch-Strasse 38
W-6700 Ludwigshafen (DE)**

(72) Erfinder : **Dotzauer, Bernhard, Dr.
Woehlerstrasse 12f
W-6701 Maxdorf (DE)**
Erfinder : **Beckerle, Wilhem Friedrich
Beethovenstrasse 20 1/2
W-6712 Bobenheim-Roxheim (DE)**
Erfinder : **Denu, Hans-Juergen
Koenigsgarten 2
W-6705 Deidesheim (DE)**
Erfinder : **Wendel, Kurt, Dr.
Woehlerstrasse 26
W-6700 Ludwigshafen (DE)**
Erfinder : **Schwartz, Manfred, Dr.
Friesenstrasse 24
W-6700 Ludwigshafen (DE)**

## Beschreibung

Die vorliegende Erfindung betrifft Formkörper, dadurch erhältlich, daß man Formgrundkörper, die hauptsächlich aus mineralischen Fasern, nichtfasrigen mineralischen Füllstoffen und Stärke aufgebaut sind, mit Massen imprägniert und/oder beschichtet, die als Bindemittel Copolymerisate enthalten, die aus

a) 60 bis 95 Gew.-% Methylmethacrylat (Monomeres I)

b) 5 bis 40 Gew.-% Acryl- und/oder Methacrylsäure (Monomere II)

c) 0 bis 35 Gew.-% eines oder mehrerer Acrylsäureester eines $C_1$- bis $C_8$-Alkanols (Monomere III)

d) 0 bis 5 Gew.-% copolymerisierbaren mehrfach olefinisch ungesättigten Monomeren (Monomere IV) und

e) 0 bis 5 Gew.-% sonstigen copolymerisierbaren Monomeren (Monomere V)

in polymerisierter Form aufgebaut sind, wobei die Gewichtsanteile der Monomeren I, II, III und V innerhalb der angegebenen Grenzen so gewählt sind, daß ein nur aus diesen Monomeren aufgebautes Polymerisat eine Glastemperatur von 60 bis 125°C aufweisen würde.

Formgrundkörper, die hauptsächlich aus mineralischen Fasern, nichtfasrigen mineralischen Füllstoffen und Stärke aufgebaut sind, sowie Verfahren zur Herstellung solcher Formgrundkörper, sind allgemein bekannt. Üblicherweise werden sie für die verschiedensten Anwendungszwecke mit einer Dekorbeschichtung versehen, die als Bindemittel hauptsächlich Vinylactat enthaltende Polymerisate oder Copolymerisate auf der Basis von Vinylacetat, Vinylchlorid und Ethylen oder Acrylsäureestern und Styrol enthalten. Unter anderem werden solche Formkörper in flächiger Ausführung als Schalldämmplatten eingesetzt.

Nachteilig an Formkörpern des genannten Aufbaus ist jedoch ihre mangelhafte Formbeständigkeit unter Einwirkung erhöhter Luftfeuchtigkeit. Sie nehmen die Luftfeuchtigkeit auf und verformen sich unter ihrem Eigengewicht.

Die EP-A 0123 234 enthält einen Hinweis auf hauptsächlich aus mineralischen Fasern, nichtfasrigen mineralischen Füllstoffen und Stärke aufgebaute Schalldämmplatten, die zur Steigerung ihrer Formbeständigkeit unter Einwirkung erhöhter Luftfeuchtigkeit mit wäßrigen Melamin/Formaldehyd-Harzen beschichtet sind. Ein Mangel derartiger Beschichtungen ist jedoch, daß sie im Laufe der Zeit häufig Formaldehyd freisetzen, was insbesondere bei einer Anwendung in geschlossenen Räumen von Nachteil ist.

Der vorliegenden Erfindung lag daher die Aufgabe zugrunde, auf der Basis von Formgrundkörpern, die hauptsächlich aus mineralischen Fasern, nichtfasrigen mineralischen Füllstoffen und Stärke aufgebaut sind, Formaldehyd-freie Formkörper mit bei Einwirkung erhöhter Luftfeuchtigkeit verbesserter Formbeständigkeit zur Verfügung zu stellen, die in flächiger Ausführung insbesondere als Schalldämmplatten geeignet sind.

Demgemäß wurden die eingangs definierten Formkörper gefunden.

Weiterhin wurde gefunden, daß solche Beschichtungsmassen besonders gut für die Herstellung von erfindungsgemäßen Beschichtungen geeignet sind, die

a) 3 bis 10 Gew.-% der genannten Copolymerisate in Form eines Dispersionspolymerisates (wasserfrei gerechnet)

b) 60 bis 75 Gew.-% feinteilige inerte Füllstoffe

c) geringe Mengen sonst üblicher Hilfsmittel und

d) als Restmenge mindestens 15 Gew.-% Wasser enthalten.

Als Monomere II enthalten die erfindungsgemäß einzusetzenden Copolymerisate bevorzugt Methacrylsäure einpolymerisiert, während von den Monomeren III Methylacrylat, Ethylacrylat, n-Butylacrylat und 2-Ethylhexylacrylat bevorzugt sind. Als Monomere IV kommen insbesondere zweifach olefinisch ungesättigte Monomere wie Divinylbenzol, Butandiolacrylat und -methacrylat oder Diallylphthalat in Betracht, während als Monomere V Acryl- und Methacrylnitril, Vinylester von Alkansäuren mit 2 bis 6 Kohlenstoffatomen wie Vinylacetat und Vinylpropionat sowie vinylaromatische Verbindungen wie Styrol und Vinyltoluol bevorzugt sind.

Enthalten die erfindungsgemäß zu verwendenden Copolymerisate Gemische der Monomeren I, II, III und/oder V, so sind die Gewichtsanteile dieser Monomeren mit Hilfe der Beziehung von Fox in vorteilhafter Weise so gewählt, daß ein nur aus diesen Monomeren aufgebautes Polymerisat eine Glastemperatur Tg von 60 bis 125°C aufweisen würde. Nach Fox (T.G. Fox, Bull. Am. Phys. Soc. (Ser. II), 1, 123 (1956)) gilt für die Glastemperatur von Mischpolymerisaten in guter Näherung:

$$\frac{1}{Tg} = \frac{X^1}{Tg^1} + \frac{X^2}{Tg^2} + \dots \dots \frac{X^n}{Tg^n}$$

wobei $X^1$, $X^2$, ..., $X^n$ die Massenbrüche der Monomeren 1, 2, ..., n und $Tg^1$, $Tg^2$, ..., $Tg^n$ die Glastemperaturen der jeweils nur aus einem der Monomeren 1, 2, ... oder n aufgebauten Polymeren in Grad Kelvin bedeuten.

Die Glastemperaturen dieser Homopolymerisate der oben aufgeführten Monomeren I, II, III und V sind bekannt und z.B. in J. Brandrup, E.H. Immergut, Polymer Handbook 1st Ed. J. Wiley, New York, 1966 und 2nd Ed. J. Wiley, New York, 1975 aufgeführt. Besonders bevorzugt werden Copolymerisate folgender Zusammensetzung:

2

a) 60 bis 75 Gew.-% Methylmethacrylat

b) 5 bis 30 Gew.-% Methacrylsäure und 0 bis 10 Gew.-% Acrylsäure

c) 0 bis 30 Gew.-% Monomere III.

Copolymerisate der eingangs definierten Zusammensetzung sind bekannt und nach den an sich bekannten Methoden der radikalischen Lösungs- und Emulsionspolymerisation erhältlich, so daß sich nähere Angaben hierzu erübrigen. Da die erfindungsgemäßen Beschichtungs- und/oder Imprägnierungsmassen bevorzugt in Form wäßriger Dispersionen verwendet werden, empfiehlt es sich besonders, das Bindemittel ebenfalls in dieser Form einzusetzen und demgemäß stellt man es vorzugsweise als Emulsionspolymerisat her. Das zahlenmittlere Molekulargewicht beträgt üblicherweise $5 \cdot 10^3$ bis $5 \cdot 10^6$, bevorzugt $10^5$ bis $2 \cdot 10^6$. Als Emulgatoren haben sich insbesondere anionische Emulgatoren wie die Alkalimetallsalze von $C_{12}$- bis $C_{14}$-Alkylsulfonsäuren bewährt. Der pH-Wert der durch radikalische Emulsionspolymerisation primär erhältlichen wäßrigen Dispersionen wird durch Zugabe von 25 gew.%igem wäßrigem Ammoniak in anwendungstechnisch vorteilhafter Weise auf einen Wert von 3 bis 7, bevorzugt 4 bis 6 eingestellt. Bei weiterer Erhöhung des pH-Wertes verändern sich die wäßrigen Dispersionen in der Regel zu klaren Flüssigkeiten (Lösungen) die mit besonderem Vorteil zum Imprägnieren geeignet sind und bevorzugt einen pH-Wert von 7 bis 8,5 aufweisen.

Neben dem obligatorischen Copolymerisat können die erfindungsgemäß anzuwendenden Massen zusätzlich in der Beschichtungs- und Imprägnierungstechnologie übliche Hilfsstoffe enthalten. Beispiele hierfür sind feinteilige inerte Füllstoffe wie Aluminiumsilicate, Quarz, gefällte oder pyrogene Kieselsäure, Leicht- und Schwerspat, Talkum, Dolomit oder Calciumcarbonat, farbgebende Pigmente wie Titanweiß, Bleiweiß, Zinkweiß, Eisenoxidschwarz, Zinkgrün, Cadmiumrot oder Cadmiumgelb, Viskositätsregler wie die Umsetzungsprodukte von ethoxylierten (EO-Grad: 70 bis 110) $C_{14}$-bis $C_{16}$-Alkanolen mit Hexamethylendiisocyanat, Dispergiermittel wie die Ammoniumsalze mittelmolekularer Polyacrylsäuren mit einem gewichtsmittleren Molekulargewicht $\overline{M}_w$ von 40.000 bis 60.000, Schauminhibitoren wie Dimethylpolysiloxane, Haftvermittler, wasserlösliche Farbstoffe oder Konservierungsmittel. Die einzusetzenden Mengen dieser Zusatzstoffe sind dem Durchschnittsfachmann an sich bekannt und werden im Einzelfall gemäß den gewünschten Eigenschaften der besonderen Masse ausgewählt. Bezogen auf das Gesamtgewicht der Zubereitung beträgt der Anteil der eingangs definierten Copolymerisate in der Regel 1 bis 30 Gew.-%, während der Anteil der inerten Füllstoffe bei 0 bis 85 Gew.-% liegt und der Wasseranteil mindestens 10 Gew.-% beträgt. Die Herstellung der erfindungsgemäß zu verwendenden Massen erfolgt in zweckmäßiger Weise durch Einrühren der gegebenenfalls mitzuverwendenden Zusatzstoffe in eine 5 bis 65 gew.%ige, das eingangs definierte Copolymerisat enthaltende, wäßrige Polymerdispersion oder -lösung. Zusatzstofffreie Dispersionen oder Lösungen werden bevorzugt zum Imprägnieren eingesetzt. In vorteilhafter Weise werden die Formgrundkörper zunächst mit erfindungsgemäßen wäßrigen Copolymerlösungen imprägniert, wobei eine allseitige Imprägnierung bevorzugt wird, und nach anschließendem Trocknen mit pigmentierten erfindungsgemäßen Massen als Dekor beschichtet.

Um optisch ansprechende Beschichtungen zu erhalten ist es von Vorteil, die Gesamtbeschichtung in mehreren Arbeitsgängen durchzuführen und zwischen den einzelnen Arbeitsgängen die jeweils aufgetragene Schicht zu trocknen, wobei in der Regel Temperaturen von 100 bis 180°C angewendet werden. Das erfindungsgemäße Verfahren kann mit besonderem Vorteil zur Herstellung von Schalldämmplatten mit in Gegenwart von Luftfeuchtigkeit verbesserter Formbeständigkeit eingesetzt werden, wobei die flächigen Formgrundkörper gegebenenfalls mit Schall-absorbierenden Strukturen versehen sein können. Das Auftragen der erfindungsgemäßen Massen kann durch Sprühen, Rollen oder Gießen erfolgen, wobei die Oberfläche des Formgrundkörpers in der Regel zuvor abgeschliffen wird. Die aufgetragenen Mengen betragen im allgemeinen (gerechnet in Mengen M des in der Beschichtungs- oder Imprägnierungsmasse enthaltenen wasserfreien Copolymerisats) 2 bis 100 g/m².

Beispiele B1 bis B16 und Vergleichsbeispiele V1 bis V4.

Formbeständigkeit einiger flächiger Formkörper bei Einwirkung erhöhter Luftfeuchtigkeit

Beispiel 1

Ein 1,5 cm dicker flächiger (60 cm x 60 cm, abgeschliffene Vorderseite mit Schall-absorbierender Struktur, nicht abgeschliffene Rückseite) Formgrundkörper, der zu 66 Gew.-% aus Basaltwolle, zu 26 Gew.-% aus feinteiligem Ton und zu 7 Gew.-% aus Stärke aufgebaut war und eine Dichte von 0,35 g/cm³ aufwies, wurde auf der Vorderseite in zwei Arbeitsgängen durch Aufsprühen mit einer Masse beschichtet, die durch Einrühren von

800 g     feinteiligem $CaCO_3$

4 g     Viskositätsregler auf der Basis des Umsetzungsproduktes eines Gemisches aus ethoxylierten (EO-Grad: 100) $C_{14}$- bis $C_{16}$-Alkanolen mit Hexamethylendiisocyanat

3

4 g          Ammoniumsalz einer mittelmolekularen Polyacrylsäure ($\overline{M}_w$ = 50.000) und

2 g          einer Schaum inhibierenden Zubereitung auf der Basis eines Dimethylpolysilans

in 304 g einer 12 gew.%igen wäßrigen anionischen Dispersion (pH = 6,2) eines Emulsionscopolymerisates aus 70 Gew.-% Methylmethacrylat, 25 Gew.-% Methacrylsäure und 5 Gew.-% Acrylsäure erhalten worden war, wobei die im jeweiligen Arbeitsgang aufgetragene Schicht jeweils 20 min bei 160°C getrocknet wurde. Die in den beiden Arbeitsgängen aufgetragenen Mengen betrugen, angegeben in Mengen M des in der Beschichtungsmasse enthaltenen wasserfreien Copolymerisats, 11,7 und 10,0 g/m². Anschließend wurde die erhaltene Schalldämmplatte 48 h bei 38°C und 95 % relativer Luftfeuchtigkeit auf einem Metallgestell waagerecht so gelagert, daß die Auflagefläche allseitig eine Breite von 1 cm aufwies. Danach wurde als Maß für die erfolgte Formveränderung der Abstand a des Pattenmittelpunktes (Schnittpunkt der Diagonalen) von seiner Ausgangsposition bestimmt. a betrug 34 mm.

Beispiel 2

Wie Beispiel 1, jedoch mit folgenden Unterschieden: Es wurde zusätzlich in einem Arbeitsgang die Rückseite beschichtet.

M-Vorderseite      : 13,4 und 6,7 g/m²

M-Rückseite       : 8,3 g/m²

a                : 28 mm

Beispiel 3

Wie Beispiel 1, jedoch mit folgenden Unterschieden: Es wurde in 280 g einer 12,9 gew.-%igen wäßrigen anionischen Dispersion (pH = 7,3) eines Emulsionscopolymerisates aus 65 Gew.-% Methylmethacrylat, 28 Gew.-% n-Butylacrylat und 7 Gew.-% Methacrylsäure eingerührt.

M-Vorderseite      : 12,6 und 11,6 g/m²

a                : 31 mm

Beispiel 4

Wie Beispiel 3, jedoch mit folgenden Unterschieden: Es wurde zusätzlich in einem Arbeitsgang die Rückseite beschichtet.

M-Vorderseite      : 10,6 und 9,6 g/m²

M-Rückseite       : 5,9 g/m²

a                : 26 mm

Beispiel 5

Wie Beispiel 1, jedoch mit folgenden Unterschieden: Es wurde in 310 g einer 14,5 gew.-%igen wäßrigen anionischen Dispersion (pH = 7,8) eines Emulsionscopolymerisates aus 75 Gew.-% Methylmethacrylat, 20 Gew.-% 2-Ethylhexylacrylat, 4 Gew.-% Methacrylsäure und 1 Gew.-% Acrylsäure eingerührt.

M-Vorderseite      : 12,4 und 11,2 g/m²

a                : 35 mm

Beispiel 6

Wie Beispiel 5, jedoch mit folgenden Unterschieden: Es wurde zusätzlich in einem Arbeitsgang die Rückseite beschichtet.

M-Vorderseite      : 12,0 und 11,6 g/m²

M-Rückseite       : 10,5 g/m²

a                : 23 mm

Beispiel 7

Wie Beispiel 1, jedoch mit folgenden Unterschieden: Es wurde in 294 g einer 13,4 gew.-%igen wäßrigen anionischen Dispersion (pH = 6,8) eines Emulsionscopolymerisates aus 60 Gew.-% Methylmethacrylat, 20 Gew.-% n-Butylacrylat, 10 Gew.-% Methylacrylat und 10 Gew.-% Methacrylsäure eingerührt.

M-Vorderseite      : 10,7 und 11,4 g/m²

a : 34 mm

Beispiel 8

Wie Beispiel 7, jedoch mit folgenden Unterschieden: Es wurde zusätzlich in einem Arbeitsgang die Rückseite beschichtet.

M-Vorderseite : 12,5 und 12,5 g/m$^2$
M-Rückseite : 7,1 g/m$^2$
a : 27 mm

Beispiel 9

Wie Beispiel 1, jedoch mit folgenden Unterschieden: Es wurde in 440 g einer 6,8 gew.-%igen wäßrigen Lösung (pH = 8,2) eines Emulsionscopolymerisates aus 65 Gew.-% Methylmethacrylat, 5 Gew.-% 2-Ethylhexylacrylat und 30 Gew.-% Methacrylsäure eingerührt.

M-Vorderseite : 9,6 und 4,8 g/m$^2$
a : 22 mm

Beispiel 10

Wie Beispiel 9, jedoch mit folgenden Unterschieden: Es wurde zusätzlich in einem Arbeitsgang die Rückseite beschichtet.

M-Vorderseite : 7,2 und 7,2 g/m$^2$
M-Rückseite : 7,2 g/m$^2$
a : 18 mm

Beispiel 11

Wie Beispiel 1, jedoch mit folgenden Unterschieden: Es wurde in 420 g einer 9 gew.-%igen wäßrigen Lösung (pH = 7,8) eines Emulsionscopolymerisates aus 60 Gew.-% Methylmethacrylat, 10 Gew.-% Methylacrylat und 30 Gew.-% Methacrylsäure eingerührt.

M-Vorderseite : 12,3 und 6,1 g/m$^2$
a : 28 mm

Beispiel 12

Wie Beispiel 11, jedoch mit folgenden Unterschieden: Es wurde zusätzlich in einem Arbeitsgang die Rückseite beschichtet.

M-Vorderseite : 11,7 und 6,1 g/m$^2$
M-Rückseite : 7,7 g/m$^2$
a : 23 mm

Beispiel 13

Wie Beispiel 1, jedoch mit folgenden Unterschieden: Es wurde in eine Mischung aus 281,6 g einer 13 gew.-%igen wäßrigen anionischen Dispersion (pH = 7,3) eines Emulsionscopolymerisates aus 65 Gew.-% Methylmethacrylat, 28 Gew.-% n-Butylacrylat und 7 Gew.-% Methacrylsäure und 20,4 g einer 9 gew.-%igen wäßrigen Lösung (pH = 7,2) eines Emulsionscopolymerisates aus 60 Gew.-% Methylmethacrylat, 10 Gew.-% Methylacrylat und 30 Gew.-% Methacrylsäure eingerührt.

M-Vorderseite : 5,2 und 5,0 g/m$^2$
a : 25 mm

Beispiel 14

Wie Beispiel 13, jedoch mit folgenden unterschieden: Es wurde zusätzlich in einem Arbeitsgang die Rückseite beschichtet.

M-Vorderseite : 6,1 und 5,4 g/m$^2$
M-Rückseite : 3,1 g/m$^2$

a                         : 21 mm

Beispiel 15

Der flächige Formgrundkörper aus Beispiel 1 wurde mit der 9 gew.-%igen wäßrigen Polymerlösung aus Beispiel 11 auf der Vorder- und der Rückseite durch Aufsprühen imprägniert und wie in Beispiel 1 getrocknet.
M-Vorderseite    : 57 g/m$^2$
a                         : 78 g/m$^2$
Nach dem Trocknen wurde die Vorderseite zusätzlich mit der Masse aus Beispiel 3 beschichtet.
M-Vorderseite    : zusätzlich 17,5 g/m$^2$
                            a wurde wie in Beispiel 1 bestimmt.
a                         : 20 mm

Beispiel 16

Wie Beispiel 15, jedoch mit folgenden Unterschieden: Es wurden eine 12,5 gew.-%ige wäßrige Polymerlösung des Emulsionscopolymerisates aus Beispiel 9 und die Masse aus Beispiel 5 eingesetzt.
M-Vorderseite    : 74 g/m$^2$
M-Rückseite      : 71 g/m$^2$
M-Vorderseite    : zusätzlich 18,6 g/m$^2$
a                         : 17 mm

V1

Wie Beispiel 1, jedoch mit folgenden unterschieden: Es wurde in 296 g einer 16 gew.-%igen wäßrigen anionischen Dispersion (pH = 7,8) eines Emulsionscopolymerisates aus 49 Gew.-% n-Butylacrylat, 49 Gew.-% Styrol und 2 Gew.-% Acrylsäure eingerührt. Die Lagerdauer der Schalldämmplatte bei 38°C und 95 % relativer Luftfeuchtigkeit betrug nur 24 h.
M-Vorderseite    : 17,1 und 10,7 g/m$^2$
a                         : >50 mm

V2

Wie V1, jedoch mit folgenden unterschieden: Es wurde zusätzlich in einem Arbeitsgang die Rückseite beschichtet
M-Vorderseite    : 15,0 und 10,7 g/m$^2$
M-Rückseite      : 8,6 g/m$^2$
a                         : >50 mm

V3

Wie Beispiel 1, jedoch mit folgenden Unterschieden: Es wurde in 304 g einer 17,2 gew.-%igen wäßrgen anionischen Dispersion (pH = 7,2) eines Emulsionscopolymerisates aus 57 Gew.-% Vinylacetat, 27 Gew.-% Vinylchlorid und 16 Gew.-% Ethylen eingerührt. Die Lagerdauer der Schalldämmplatte bei 38°C und 95 relativer Luftfeuchtigkeit betrug nur 24 h.
M-Vorderseite    : 19,7 und 13,6 g/m$^2$
a                         : >50 mm

V4

Wie V3, jedoch mit folgenden Unterschieden: Es wurde zusätzlich in einem Arbeitsgang die Rückseite beschichtet.
M-Vorderseite    : 16,1 und 9,4 g/m$^2$
M-Rückseite      : 10,8 g/m$^2$
a                         : >50 mm

**Patentansprüche**

**Patentansprüche für folgenden Vertragsstaaten: AT, BE, CH, LI, DE, FR, GB, IT, NL, SE**

1. Formkörper, dadurch erhältlich, daß man Formgrundkörper, die hauptsächlich aus mineralischen Fasern, nichtfasrigen mineralischen Füllstoffen und Stärke aufgebaut sind, mit Massen imprägniert und/oder beschichtet, die als Bindemittel Copolymerisate enthalten, die aus

a) 60 bis 95 Gew.-% Methylmethacrylat (Monomeres I)
b) 5 bis 40 Gew.-% Acryl- und/oder Methacrylsäure (Monomere II)
c) 0 bis 35 Gew.-% eines oder mehrerer Acrylsäureester eines $C_1$- bis $C_8$-Alkanols (Monomere III)
d) 0 bis 5 Gew.-% copolymerisierbaren mehrfach olefinisch ungesättigten Monomeren (Monomere IV) und
e) 0 bis 5 Gew.-% sonstigen copolymerisierbaren Monomeren (Monomere V)

in polymerisierter Form aufgebaut sind, wobei die Gewichtsanteile der Monomeren I, II, III und V innerhalb der angegebenen Grenzen so gewählt sind, daß ein nur aus diesen Monomeren aufgebautes Polymerisat eine Glastemperatur von 60 bis 125°C aufweisen würde.

2. Verfahren zur Herstellung von Formkörpern aus Formgrundkörpern, die hauptsächlich aus mineralischen Fasern, nichtfasrigen mineralischen Füllstoffen und Stärke aufgebaut sind, dadurch gekennzeichnet, daß man die Formgrundkörper mit Massen imprägniert und/oder beschichtet, die als Bindemittel Copolymerisate enthalten, die aus

a) 60 bis 95 Gew.-% Methylmethacrylat (Monomeres I)
b) 5 bis 40 Gew.-% Acryl- und/oder Methacrylsäure (Monomere II)
c) 0 bis 35 Gew.-% eines oder mehrerer Acrylsäureester eines $C_1$- bis $C_8$-Alkanols (Monomere III)
d) 0 bis 5 Gew.-% copolymerisierbaren mehrfach olefinisch ungesättigten Monomeren (Monomere IV) und
e) 0 bis 5 Gew.-% sonstigen copolymerisierbaren Monomeren (Monomere V)

in polymerisierter Form aufgebaut sind, wobei die Gewichtsanteile der Monomeren I, II, III und V innerhalb der angegebenen Grenzen so gewählt sind, daß ein nur aus diesen Monomeren aufgebautes Polymerisat eine Glastemperatur von 60 bis 125°C aufweisen würde.

**Patentanspruch für folgenden Vertragsstaat: ES**

1. Verfahren zur Herstellung von Formkörpern aus Formgrundkörpern, die hauptsächlich aus mineralischen Fasern, nichtfasrigen mineralischen Füllstoffen und Stärke aufgebaut sind, dadurch gekennzeichnet, daß man die Formgrundkörper mit Massen imprägniert und/oder beschichtet, die als Bindemittel Copolymerisate enthalten, die aus

a) 60 bis 95 Gew.-% Methylmethacrylat (Monomeres I)
b) 5 bis 40 Gew.-% Acryl- und/oder Methacrylsäure (Monomere II)
c) 0 bis 35 Gew.-% eines oder mehrerer Acrylsäureester eines $C_1$- bis $C_8$-Alkanols (Monomere III)
d) 0 bis 5 Gew.-% copolymerisierbaren mehrfach olefinisch ungesättigten Monomeren (Monomere IV) und
e) 0 bis 5 Gew.-% sonstigen copolymerisierbaren Monomeren (Monomere V)

in polymerisierter Form aufgebaut sind, wobei die Gewichtsanteile der Monomeren I, II, III und V innerhalb der angegebenen Grenzen so gewählt sind, daß ein nur aus diesen Monomeren aufgebautes Polymerisat eine Glastemperatur von 60 bis 125°C aufweisen würde.

**Claims**

**Claims for the following Contracting States: AT, BE, CH, LI, DE, FR, GB, IT, NL, SE**

1. A shaped article obtainable by impregnating or coating a preform composed in the main of mineral fibers, nonfibrous mineral fillers and starch with a composition containing a binder comprising a copolymer composed of

a) 60-95% by weight of methyl methacrylate (monomer I),
b) 5-40% by weight of acrylic or methacrylic acid (monomer II),
c) 0-35% by weight of one or more acrylic esters of a $C_1$-$C_8$-alkanol (monomer III),
d) 0-5% by weight of a copolymerizable olefinically polyunsaturated monomer (monomer IV), and
e) 0-5% by weight of another copolymerizable monomer (monomer V)

in polymerized form, the weight percentages of monomers I, II, III and V having been selected within the stated limits in such a way that a polymer composed of these monomers only would have a glass transition temperature of from 60 to 125°C.

2. A process for producing a shaped article from a preform composed in the main of mineral fibers, nonfibrous mineral fillers and starch, which comprises impregnating or coating the preform with a composition containing a binder comprising a copolymer composed of

a) 60-95% by weight of methyl methacrylate (monomer I),

b) 5-40% by weight of acrylic or methacrylic acid (monomer II),

c) 0-35% by weight of one or more acrylic esters of a $C_1$-$C_8$-alkanol (monomer III),

d) 0-5% by weight of a copolymerizable olefinically polyunsaturated monomer (monomer IV), and

e) 0-5% by weight of another copolymerizable monomer (monomer V)

in polymerized form, the weight percentages of monomers I, II, III and V having been selected within the stated limits in such a way that a polymer composed of these monomers only would have a glass transition temperature of from 60 to 125°C.

## Claim for the following contracting State: ES

1. A process for producing a shaped article from a preform composed in the main of mineral fibers, nonfibrous mineral fillers and starch, which comprises impregnating or coating the preform with a composition containing a binder comprising a copolymer composed of

a) 60-95% by weight of methyl methacrylate (monomer I),

b) 5-40% by weight of acrylic or methacrylic acid (monomer II),

c) 0-35% by weight of one or more acrylic esters of a $C_1$-$C_8$-alkanol (monomer III),

d) 0-5% by weight of a copolymerizable olefinically polyunsaturated monomer (monomer IV), and e) 0-5% by weight of another copolymerizable monomer (monomer V)

in polymerized form, the weight percentages of monomers I, II, III and V having been selected within the stated limits in such a way that a polymer composed of these monomers only would have a glass transition temperature of from 60 to 125°C.

## Revendications

## Revendications pour les Etats contractants suivants: AT, BE, CH, LI, DE, FR, GB, IT, NL, SE

1. Articles moulés que l'on peut obtenir par l'imprégnation et/ou le revêtement d'articles moulés de base qui se composent principalement de fibres minérales, de charges minérales non fibreuses et d'amidon, avec des masses ou matières qui contiennent, à titre de liants, des copolymères qui contiennent de

a) 60 à 95% en poids de méthacrylate de méthyle (monomère I)

b) 5 à 40% en poids d'acide acrylique et/ou d'acide méthacrylique (monomère II)

c) 0 à 35% en poids d'un ou plusieurs esters de l'acide acrylique d'un alcanol en $C_1$ à $C_8$ (monomère III)

d) 0 à 5% en poids de monomères oléfiniquement polyinsaturés, copolymérisables (monomères IV) et

e) 0 à 5% en poids d'autres monomères copolymérisables (monomères V)

sous forme polymérisée, où les parties pondérales des monomères I, II, III et V sont choisies, entre les limites précitées, de telle manière qu'un polymère uniquement constitué de ces monomères présente une température de transition vitreuse de 60 à 125°C.

2. Procédé de fabrication d'articles moulés à partir d'articles moulés de base, qui sont principalement constitués de fibres minérales, de charges minérales non fibreuses et d'amidon, caractérisé en ce que l'on revêt et/ou imprègne des articles moulés de base avec les masses ou matières qui contiennent, à titre de liants, des copolymères qui se composent de

a) 60 à 95% en poids de méthacrylate de méthyle (monomère I)

b) 5 à 40% en poids d'acide acrylique et/ou d'acide méthacrylique (monomère II)

c) 0 à 35% en poids d'un ou plusieurs esters de l'acide acrylique d'un alcanol en $C_1$ à $C_8$ (monomère III)

d) 0 à 5% en poids de monomères oléfiniquement polyinsaturés, copolymérisables (monomères IV) et

e) 0 à 5% en poids d'autres monomères copolymérisables (monomères V)

sous forme polymérisée, où les parties pondérales des monomères I, II, III et V sont choisies, entre les limites précitées, de telle manière qu'un polymère uniquement constitué de ces monomères présente une température de transition vitreuse de 60 à 125°C.

**Revendication pour l'Etat contractant suivant: ES**

1. Procédé de fabrication d'articles moulés à partir d'articles moulés de base, qui sont principalement constitués de fibres minérales, de charges minérales non fibreuses et d'amidon, caractérisé en ce que l'on revêt et/ou imprègne des articles moulés de base avec les masses ou matières qui contiennent, à titre de liants, des copolymères qui se composent de

a) 60 à 95% en poids de méthacrylate de méthyle (monomère I)

b) 5 à 40% en poids d'acide acrylique et/ou d'acide méthacrylique (monomère II)

c) 0 à 35% en poids d'un ou plusieurs esters de l'acide acrylique d'un alcanol en $C_1$ à $C_8$ (monomère III)

d) 0 à 5% en poids de monomères oléfiniquement polyinsaturés, copolymérisables (monomères IV) et

e) 0 à 5% en poids d'autres monomères copolymérisables (monomères V)

sous forme polymérisée, où les parties pondérales des monomères I, II, III et V sont choisies, entre les limites précitées, de telle manière qu'un polymère uniquement constitué de ces monomères présente une température de transition vitreuse de 60 à 125°C.